# EUROPEAN PATENT SPECIFICATION

(11) **EP 2 945 058 B1**
(45) Date of publication and mention of the grant of the patent: **20.09.2017**
(21) Application number: 15248028.1
(22) Date of filing: 03.04.2015
(51) Int. Cl.: G06F 9/44, G06F 9/48, G06F 9/445

(54) **PROCESSING METHOD AND DEVICE FOR APPLICATION PROGRAM**
VERARBEITUNGSVERFAHREN UND -VORRICHTUNG FÜR ANWENDUNGSPROGRAMM
PROCÉDÉ ET DISPOSITIF DE TRAITEMENT D'UN PROGRAMME D'APPLICATION

(30) Priority: 14.05.2014 CN 201410203339
(43) Date of publication of application: 18.11.2015
(73) Proprietor: Xiaomi Inc., Beijing 100085 (CN)
(72) Inventor: Wang, Wenjun, 100085 Beijing (CN); Yuan, Jun, 100085 Beijing (CN); Huang, Qiwu, 100085 Beijing (CN); Han, Wei, 100085 Beijing (CN)
(74) Representative: Delumeau, François Guy

(56) References cited:
- CN-A- 104 252 389
- US-A1- 2009 113 444
- US-A1- 2013 343 373
- US-A1- 2014 002 576

## Description

### TECHNICAL FIELD

The present disclosure relates to the field of electronic terminals, and more particularly, to a processing method and a device for application program.

### BACKGROUND

Nowadays, there are many application programs designed for mobile phones, pads and other electronic terminals, and usually there is a scene of multiple applications running simultaneously in one electronic terminal. Moreover, the running of application usually presents in two forms: one is running in foreground, i.e. directly running in the window or interface displayed on the screen with showing the current interface of running application, which can interact with user of the electronic terminal via the displaying interface. The other form is running in background, which means that the screen does not show the running interface of application, but the application keeps on providing services and may be switched anytime to foreground and displayed.

During the practical use of electronic terminals, there are usually requirements of switching the running of applications from foreground to background. For example, when a user opens a music application and starts to play music, a UI (User Interface) of the music application would be calculated by the process of the music application and then displayed, and the interface contents may include play control button, album cover, song information, scrolling lyrics and so on. At this time, the user may switch the music application to run in background, turn on the back-up application to backup the terminal data, then the UI including back-up control button and back-up schedule would be calculated by the process of back-up application and displayed. While backup is in progress, the user can also switch to the home page for other operations, which may not be recited herein redundantly.

For such scenes, processing method in the related art is: when the application is switched to run in background, it keeps the same process being executed as that running in foreground, thus all of the data, services and UIs of application may be kept on being processed in the same way as that running in foreground, just the UI is hidden. When the application is switched to run in foreground again, the UI may be displayed.

In the above course of processing application programs, there are at least the following problems: as the same process is performed as that running in foreground, while the application is switched to run in background, a lot of processing resources may be occupied, and the user generally does not concern the UI of the background program in practical scenes, therefore, such a processing method may result in a waste of processing resources and a relatively low utilization efficiency of resources.

Document US 2013/343373 A1 dated 26 December 2013 discloses a computer-implemented system for implementing a VOIP application. The system includes in particular a host system and a user interface (UI) host process residing on the host system. The system also includes an agent host process residing on the host system.

Document US 2014/0002576 A1 dated 2 January 2014 discloses a cross-process media handling in a VOIP application platform.

The document US 2009/0113444 A1 (HACKBORN DIANNE K et al) discloses a method that includes executing one or more computer applications and ranking the applications according to one or more criteria that change in response to a user's interaction with the applications.

### SUMMARY

The present invention is defined in the appended set of independent claims. In order to solve the problems in the background, the embodiments of the present disclosure provide a processing method and a device for an application program, which may efficiently save processing resources of an electronic terminal, so as to improve the utilization efficiency of resources.

According to a first aspect, the invention relates to a processing method for an application program, which comprises :
switching an application program from running in foreground to running in background, wherein processes of the application program include a user interface (UI) process and a logic process; and
terminating the UI process of the application program, and keeping the logic process of the application program running.

In an embodiment, the processing method further comprises recreating the UI process of the application program according to the logic process when switching the application program from running in background to running in foreground.

In an embodiment, the processing method further comprises, before switching the application program from running in foreground to running in background :
reading out a logic process identifier and/or a UI process identifier in the configuration file of the application program when initiating the application program,;
classifying subprograms of the application program into at least a UI class and a logic class according to the logic process identifier and the UI process identifier; and
running subprograms of the application program classified as the UI class in the UI process and running subprograms of the application program classified as the logic class in the logic process.

In an embodiment, the processing method further comprises, after switching the application program from running in foreground to running in background:
determining a time length of the application program running in background; and
terminating the UI process of the application program, when the time length of the application program running in background reaches a predetermined time length.

In an embodiment, the processing method further comprises, after switching the application program from the running in foreground to the running in background:
determining a quantity of UI processes running in background; and
terminating the UI process of the application program when the quantity of the UI processes running in background reaches a predetermined quantity.

According to a second aspect, the invention relates to a processing device for an application program, comprising:
a first switching unit, configured to switch an application program from running in foreground to running in background, wherein processes of the application program comprise a user interface (UI) process and a logic process;
a terminating unit, configured to terminate the UI process of the application program after the first switching unit switches the application program from running in foreground to running in background; and
a running unit, configured to keep the logic process of the application program running after the first switching unit switches the application program from running in foreground to running in background.

In one particular embodiment, the steps of the method for processing an application program are determined by computer program instructions.

Consequently, according to a fourth aspect, the invention is also directed to a computer program for executing the steps of a processing method for an application program as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The solutions provided by embodiments of the disclosure may have the following advantages: by running the UI processes and the logic processes of the application program separately, when the application program is switched to run in background, the logic processes needed for user may be kept on running and the UI processes unconcerned by user may be terminated. The solutions, compared with the manner in related technology where the operations of the application program are assembled into one process for running and all programs of the application program are still kept on running in background, may save CPU processing resources and memory space occupied by UI calculations when the application program enters into running in background, thus may reduce power consumption of the electronic terminal, so as to achieve the purpose of power saving when many application program are run simultaneously; and may not only improve the resource utility efficiency, but also reduce the heating of the electronic terminal, due to avoiding the waste of the CPU processing resources in the electronic terminal.

It is to be understood that, both the foregoing general description and the following detailed description are exemplary and explanatory only, and do not limit the disclosure.

### BRIEF DESCRIPTION OF THE DRAWINGS

The accompanying drawings, which are incorporated in and constitute a part of this specification, illustrate embodiments consistent with the application and, together with the description, serve to explain the principles of the application.
Fig.1 is a flow chart of a processing method for an application program according to an exemplary embodiment;
Fig.2 is a flow chart of a processing method for an application program according to another exemplary embodiment;
Fig.3 is a flow chart of a processing method for an application program according to another exemplary embodiment;
Fig.4 is a flow chart of a processing method for an application program according to another exemplary embodiment;
Fig.5 is a flow chart of a processing method for an application program according to another exemplary embodiment;
Fig.6 is a block diagram of a processing device for an application program;
Fig.7 is a block diagram of another processing device for an application program;
Fig.8 is a block diagram of another processing device for an application program;
Fig.9 is a block diagram of another processing device for an application program;
Fig.10 is a block diagram of another processing device for an application program;
Fig.11 is a block diagram of a processing device for an application program according to an exemplary embodiment; and
Fig.12 is a block diagram of a processing device for an application program according to another exemplary embodiment.

### DESCRIPTION OF THE EMBODIMENTS

Illustration may now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the application. Instead, they are merely examples of apparatuses and methods consistent with aspects related to the application as recited in the appended claims.

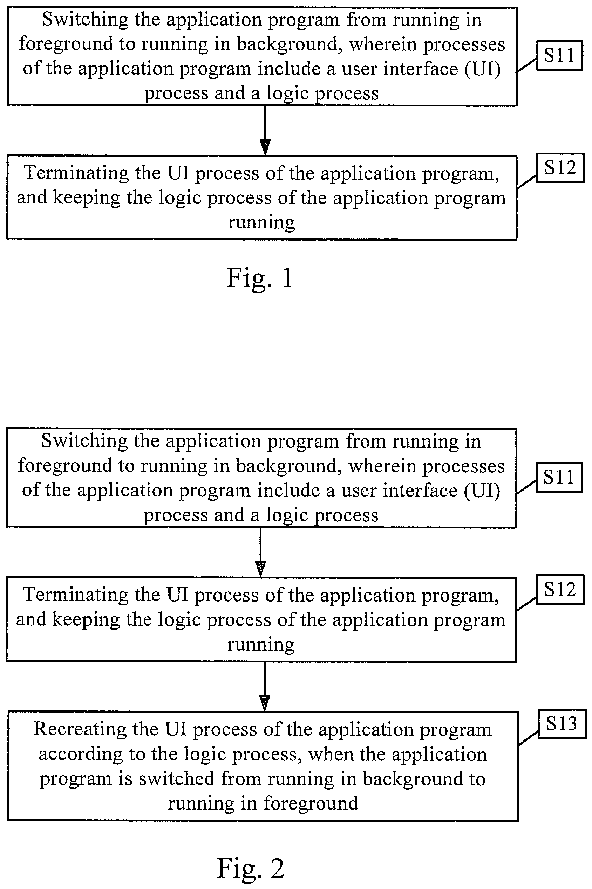

Fig.1 is a flow chart of a processing method for an application program according to an exemplary embodiment. As shown in Fig.1, the processing method for an application program is used in a terminal, and includes the following steps.

In step S11, the application program is switched from running in foreground to running in background, wherein processes of the application program include a user interface (UI) process and a logic process.

The difference between a running mode of the application program according to present disclosure and that according to related technology lies in that, the application program in related technology usually has only one process, and subprograms of services, data, algorithms and UIs are mixed in the process. However, in present disclosure, some codes of the application program are subprograms related to service, data or algorithm of the application program, which may be merged into a logic process for running; and other codes of the application program are of little influence on the core service, data or algorithm and are usually some subprograms related to the UI, and these subprograms that may be merged into a UI process for running.

For example, all of the play control button, album cover, song information, scrolling lyrics and so on in music application program may be classified into the UI process for executing, so that these programs may be terminated when switched to background. However, the service programs of the application program, such as music play, music data download, etc., may be classified into the logic process for executing, so that these programs can be kept on running even switched to background. Similarly, many applications, such as a radio, a backup, a stock and a weather application and the like, can adopt the similar method to be classified into a UI process or a logic process, so as to be run separately.

In step S12, the UI process of the application program is terminated and the logic process of the application program is kept on running.

Wherein, as the present disclosure adopts the way of running the UI process and logic process separately as described in S11, the two processes may be handled differently when switched to run in background. On the one hand, the application program is just switched from running in foreground to running in background, not shut. Thus, in order to ensure full application function of the terminal, the application program running in background are still kept on providing corresponding service, namely the corresponding logic process of the application program is kept on running. On the other hand, as the user switches the application program to background to display other interface or shut the screen, the user does not aware a UI interface of the application program running in background. However, calculation of these UI interfaces may occupy more processing resources, which are sometimes several times of that of the logic process. Thus, in order to reduce resource occupancy, when the application program is running in background, the UI interface thereof needs not to be calculated any more, namely the UI process is terminated.

Further, Fig.2 is a flow chart of a processing method for an application program according to another exemplary embodiment. As shown in Fig.2, the method may include the following steps.

In step S13, when the application program is switched from running in background to running in foreground, the UI process of the application program is recreated according to the logic process.

Wherein, although the UI process is terminated while the application program runs in background, the UI interface of the application program shall be displayed accurately in time when the application program is switched to run in foreground. When the application program is switched to run in foreground, the UI process may be restarted and recover itself completely. Therefore, after the UI process is restarted, the status of the logic process shall be visited first, and the corresponding UI interface of the current logic process shall be calculated.

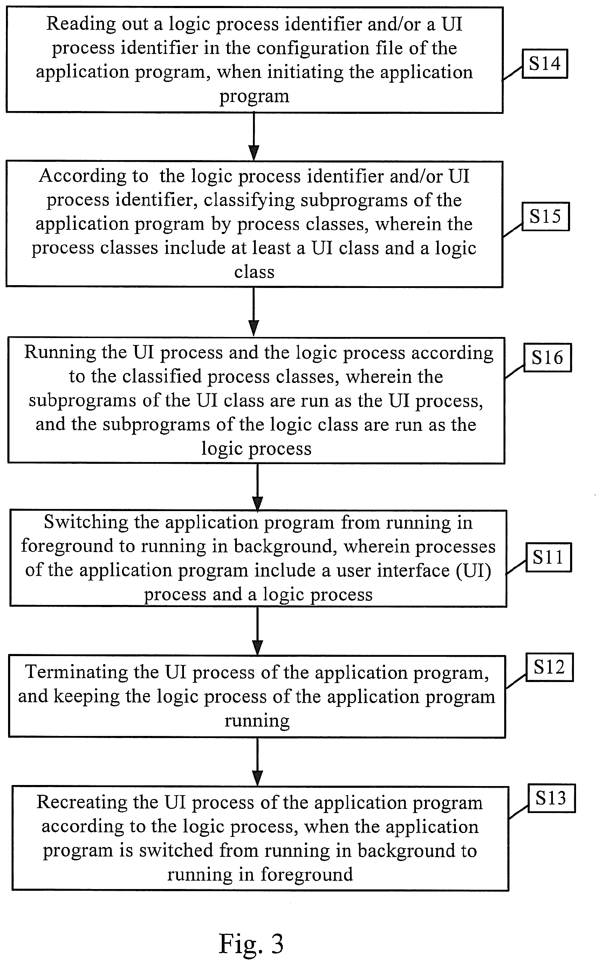

Further, Fig.3 is a flow chart of a processing method for an application program according to another exemplary embodiment. As shown in Fig.3, before step S11, the method may further include the following steps.

In step S14, when the application program is initiated, a logic process identifier and/or a UI process identifier in the configuration file of the application program is read out.

Wherein, during the development of the application program, the developer can apply the corresponding identification in the configuration file of the application program to meet the strategy of separating the logic process and the UI process according to present disclosure. The identification manner may be: labeling the processes that are not allowed to be terminated, for example, labeling a server, data and the like with a "process" or a "logic". The "process" or "logic" illustrated here may be considered as logic process identifiers, so that when the application program is run by the operation system, the programs corresponding to the "logic" are assembled into the logic process for running, and other programs are placed into the UI process for running. It can be understood that, in the configuration file of the application program, the programs related to the UI can also be labeled with UI process identifiers, similarly the programs with the UI process identifiers are placed into the UI process for running, and other programs are run as logic processes that are not allowed to be terminated even in background. Otherwise, not only the UI-related programs may be labeled with UI process identifiers, but also the logic-related programs may be labeled with logic process identifiers, which may not be limited by the embodiments of present disclosure.

In step S15, according to the logic process identifier and/or UI process identifier, subprograms of the application program are classified by process classes, wherein the process classes include at least a UI class and a logic class.

Take a music application program as an example, the configuration file of the application program is named as "AndroidManifest.xml", and elements included in the configuration file include: Activity, Service, Provider and Receiver.

Wherein brief definitions and the classified process classes of the elements are presented as follows:
(1) Activity, corresponding to every component in the UI interface, such as the music list, player view and the like that can be seen, belongs to the UI process.
(2) Service, being player services in background, belongs to the logic process.
(3) Provider, being music data, such as what music at present and the author, belongs to the logic process.
(4) Receiver, being some actions triggered after the system broadcast is received, such as starting to play a song when it is downloaded completely, belongs to the logic process.

In step S16, the UI process and the logic process are run according to the classified process classes, wherein the subprograms of the UI class are run as the UI process, and the subprograms of the logic class are run as the logic process.

Wherein, based upon classified results in step S15, the UI process is established to run the subprograms of the UI class separately, and the logic process is established to run the subprograms of the logic class separately. For example, all Activity elements in a music application are run in one UI process, and all of the elements of Service, Provider and Receiver are run in one logic process.

It shall be explained that, if step S15 can be realized, that is to say, the subprograms which are allowed or not allowed to be terminated when running in background may be embodied in the configuration file of the application program, processing resources may be effectively saved by using the method according to the embodiments of present disclosure. However, as there are many different development teams working for application programs, it can not be sure that all of the configuration files of application programs can conform to the strategy of separating the UI process and the logic process according to present disclosure. Thus, in order to avoid terminating necessary background programs of the application program and affecting the normal use of the function of the application program, a discriminative processing manner may be further adopted in this embodiment. For example, for the application program that conforms to the strategy of separating the UI process and the logic process, when it runs in background, its UI process is terminated; and for the application program that does not conform to the strategy of separating the UI process and the logic process, when it runs in background, its due program is kept on running.

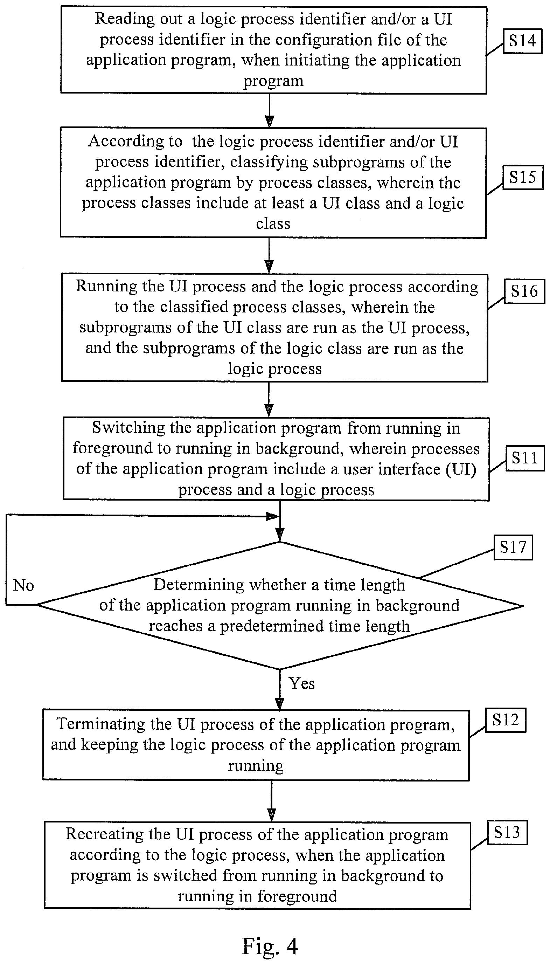

Further, in one alternative embodiment, as shown in Fig.4, in order to ensure fluently switching of interface and avoid frequently terminating and rebooting of the UI process, a judging condition for time may be added after the application program quits to run in background and before the UI process is terminated. Specifically, after step S11, the method may further include the following steps.

In step S17, it is determined whether a time length of the application program running in background reaches a predetermined time length.

Wherein, when the time length of the application program running in background reaches the predetermined time length, step S12 is performed; and when the time length of the application program running in background does not reach the predetermined time length, step S17 is kept on being performed. It can be understood that, if the application program is switched to run in background and the timing is started, and the application program returns to run in foreground without reaching the predetermined time length, the timing can be ended; and if the application program goes to run in background again, a new round of timing can be started. The predetermined time length may be preconfigured during the development of the application program, and also may be set by the user. For example, the predetermined time length may be 5 seconds or 10 seconds and so on.

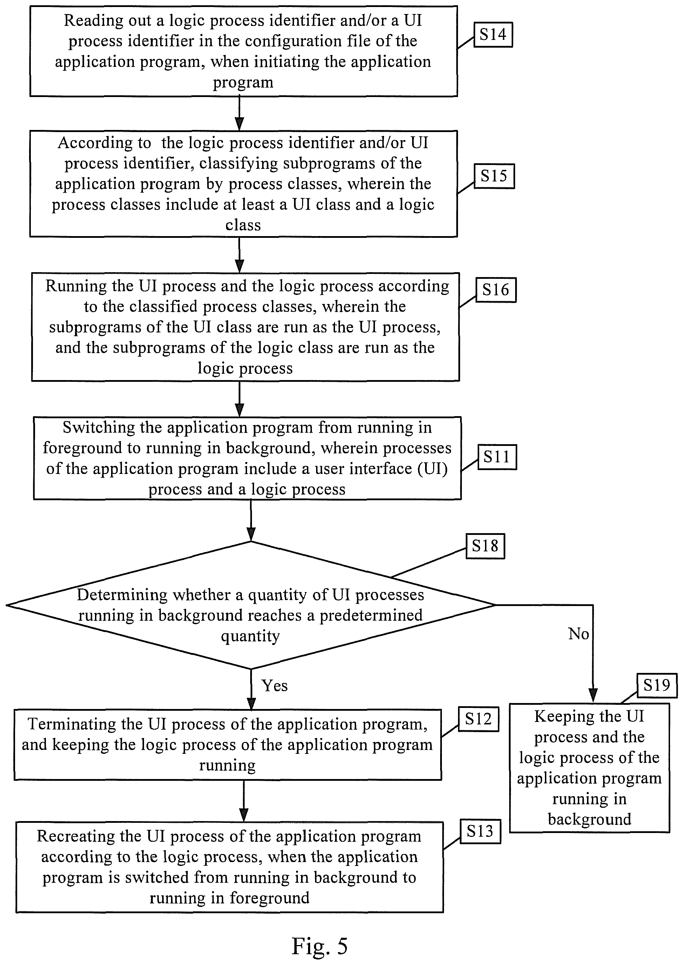

In another alternative embodiment, as shown in Fig.5, in addition that time length is taken as a condition for determining whether to terminate the background UI process, other judging conditions may also be adopted. Specifically, after step S11, the method can further include the following steps.

In step S18, it is determined whether a quantity of UI processes running in background reaches a predetermined quantity.

Wherein, when the quantity of the UI processes reaches the predetermined quantity, perform the step S12. If the quantity of the UI processes running in foreground and background does not reach the predetermined quantity, which may be considered as that available space of processing resources is relatively adequate, step S19 is performed. The predetermined quantity may be preconfigured during the development of the application program, and also may be set by the user. For example, the predetermined quantity may be 5 or 10 and so on.

In step S19, the UI process and the logic process of the application program are kept on running in background.

Wherein, since the quantity of the UI processes running in foreground and background does not reach the predetermined quantity, the UI processes of the application program may not be terminated, and the UI processes and the logic processes may still run simultaneously while running in background. When the quantity of the UI processes reaches the predetermined quantity, in order to avoid over-occupying the processing resources, the UI processes of the application program that go to run in background subsequently may be terminated.

In the processing method for the application program according to exemplary embodiments of present disclosure, by running the UI processes and the logic processes of the application program separately, when the application program is switched to run in background, the logic processes needed for user may be kept on running and the UI processes unconcerned by user may be terminated. The method, compared with the manner in related technology where the operations of the application program are assembled into one process for running and all programs of the application program are still kept on running in background, may save CPU processing resources and memory space occupied by UI calculations when the application program enters into running in background, thus may reduce power consumption of the electronic terminal, so as to achieve the purpose of power saving when many application program are run simultaneously; and may not only improve the resource utility efficiency, but also reduce the heating of the electronic terminal, due to avoiding the waste of the CPU processing resources in the electronic terminal.

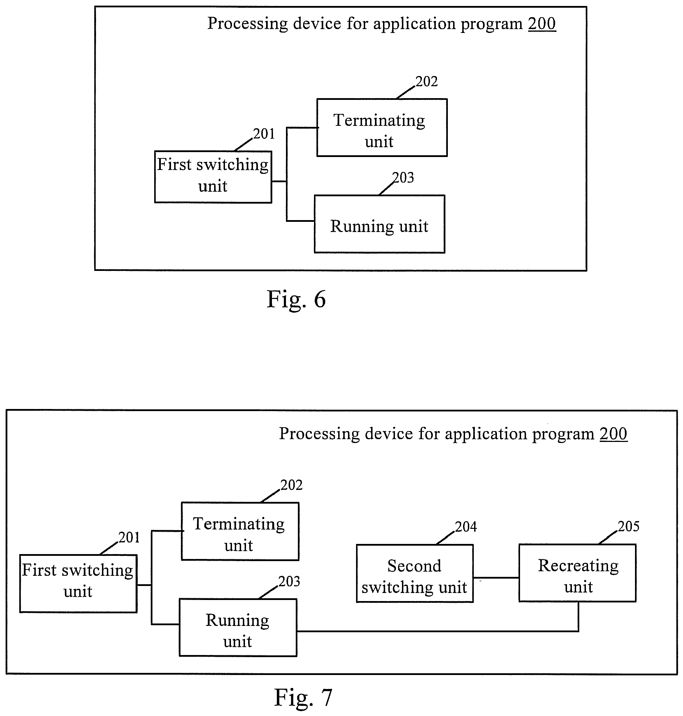

Fig.6 is a block diagram of a processing device 200 for an application program according to an exemplary embodiment. As shown in Fig.6, the processing device 200 includes: a first switching unit 201, a terminating unit 202 and a running unit 203.

The first switching unit 201 is configured to switch the application program from running in foreground to running in background, wherein processes of the application program include a user interface (UI) process and a logic process.

The terminating unit 202 is configured to terminate the UI process of the application program after the first switching unit 201 switches the application program from running in foreground to running in background.

The running unit 203 is configured to keep the logic process of the application program running after the first switching unit 201 switches the application program from running in foreground to running in background.

Further, as shown in Fig.7, the processing device 200 may include a second switching unit 204 and a recreating unit 205.

The second switching unit 204 is configured to switch the application program from running in background to running in foreground;
The recreating unit 205 is configured to recreate the UI process according to the logic process after the second switching unit 204 switches the application program from running in background to running in foreground.

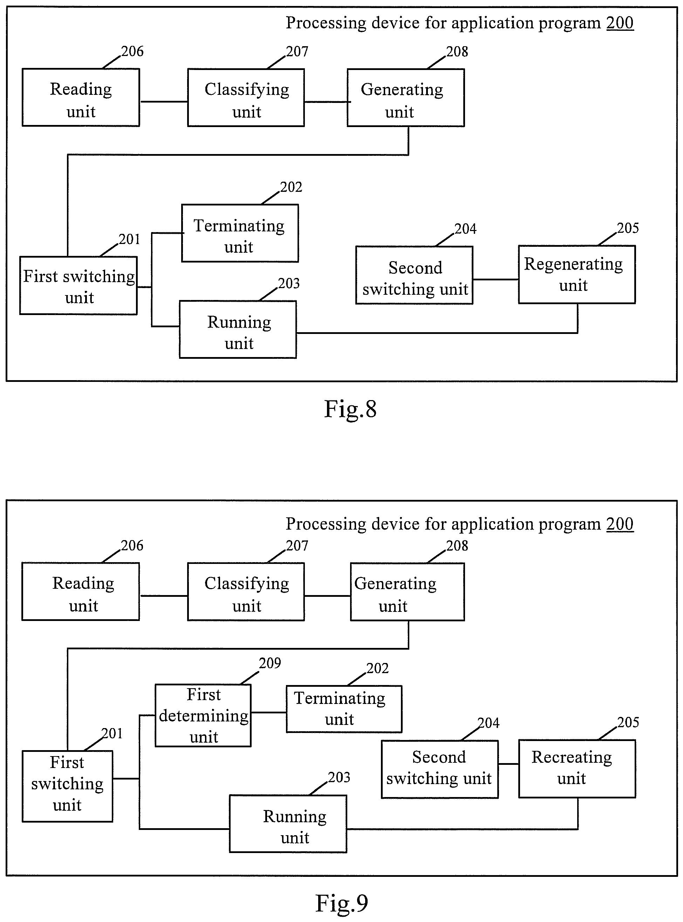

Further, as shown in Fig.8, the processing device 200 may include:
a reading unit 206, configured to read out a logic process identifier and/or a UI process identifier in a configuration file of the application program when the application program is initiated, before the first switching unit 201 switches the application program from running in foreground to running in background;
a classifying unit 207, configured to classify subprograms of the application program by process classes, according to the logic process identifier and/or the UI process identifier read out by the reading unit 206, wherein the process classes include at least a UI class and a logic class; and
a generating unit 208, configured to generate the UI process and the logic process according to the process classes classified by the classifying unit 207, wherein the subprograms of the UI class run in the UI process, and the subprograms of the logic class run in the logic process.

Further, as shown in Fig.9, in one alternative embodiment, the processing device 200 may include:
a first determining unit 209, configured to determine a time length of the application program running in background after the first switching unit 201 switches the application program from running in foreground to running in background; and
the terminating unit 202, further configured to terminate the UI process of the application program after the time length determined by the first determining unit 209 reaches the predetermined time length.

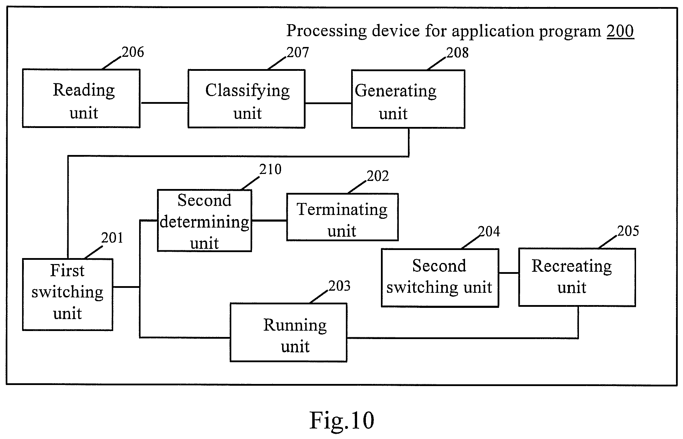

As shown in Fig.10, in another alternative embodiment, the processing device 200 may further include:
a second determining unit 210, configured to determine a quantity of UI processes running in background after the first switching unit 201 switches the application program from running in foreground to running in background; and
the terminating unit 202, further configured to terminate the UI processes of the application program after the quantity of the UI processes determined by the second determining unit 210 reaches a predetermined quantity.

With regard to the devices according to above-mentioned embodiments, specific manners in which the units perform operations have already described in embodiments of the corresponding methods, thus, no detail is illustrated herein.

In the processing device 200 for the application program according to exemplary embodiments of present disclosure, by running the UI processes and the logic processes of the application program separately, when the application program is switched to run in background, the logic processes needed for user may be kept on running and the UI processes unconcerned by user may be terminated. The device, compared with the manner in related technology where the operations of the application program are assembled into one process for running and all programs of the application program are still kept on running in background, may save CPU processing resources and memory space occupied by UI calculations when the application program enters into running in background, thus may reduce power consumption of the electronic terminal, so as to achieve the purpose of power saving when many application program are run simultaneously; and may not only improve the resource utility efficiency, but also reduce the heating of the electronic terminal, due to avoiding the waste of the CPU processing resources in the electronic terminal.

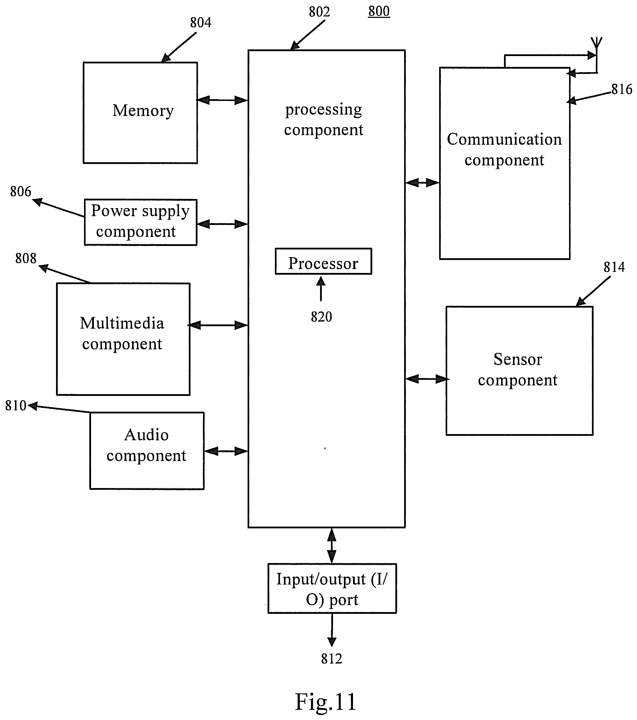

Fig.11 is a block diagram of a processing device 800 for an application program according to an exemplary embodiment. For instance, the device 800 may be mobile telephone, computer, digital broadcasting terminal, information transceiver, game console, pad equipment, medical equipment, fitness equipment, personal digital assistant and so on.

Referring to Fig.8, the processing device 800 may include one or more following components: processing component 802, memory 804, power supply component 806, multimedia component 808, audio component 810, input/output (I/O) port 812, sensor component 814 and communication component 816.

The processing component 802 usually controls the overall operations of the processing device 800, such as operations related to displaying, calling, data communication, camera operation and recording operation. The processing component 802 may include one or more processors 820 configured to perform instructions to complete all or a part of steps of above-mentioned methods. In addition, the processing component 802 may include one or more modules configured to facilitate the communication between the processing component 802 and other components. For instance, the processing component 802 may include a multimedia module to facilitate the communication between the multimedia component 808 and the processing component 802.

The memory 804 is configured to store sorts of data to support the operations of device 800. The examples of these data include instructions of any application programs or methods operated in the device 800, contact information, telephone directory data, messages, pictures, videos and so on. The memory 804 may be realized by any types of volatile or non- volatile memory devices or combinations thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic storage, a flash memory, a magnetic disk or an optical disk.

The power component 806 may provide electric power for various modules in the device 800. The power component 806 may include power management system, one or more power supply and other modules related to generating, managing and distributing power for the device 800.

The multimedia component 808 may include a screen for providing an output interface between the device 800 and the user. In some exemplary embodiments, the screen may include a Liquid Crystal Display (LCD) and a touch panel (TP). If the screen contains the touch panel, it can be realized as a touch screen for receiving input signals from the user. The touch panel may include one or more touch sensors for sensing touching, sliding and gestures on the touch panel. The touch pad may not only sense the boundary of touching or sliding operation, but also detect the length and pressure related to the touching or sliding operation. In some exemplary embodiments, the multimedia component 808 may include a preposition camera and/or a postposition camera. When the device 800 is under operation mode, such as a camera mode or a video mode, the preposition camera and/or the postposition camera may receive external multimedia data. Each of the preposition camera and the postposition camera may be a fixed optical lens system or may have focal distance and optical zooming ability.

The audio component 810 is configured to output and/or input audio signals. For example, audio component 810 may include a microphone (MIC), and when the device 800 is under operational mode, such as a calling mode, a recording mode or a voice recognition mode, the MIC may be configured to receive external audio signals. The audio signals received may be further stored in the memory 804 or sent via the communication component 816. In some exemplary embodiments, the audio component 810 may further include a speaker for outputting audio signals.

I/O port 812 provides interface between the processing component 802 and external interface modules. The external interface modules may be a keyboard, a click wheel or button etc. These buttons may include, but not limited to, a homepage button, a volume button, a start button and a locking button.

The sensor component 814 may include one or more sensors, configured to provide aspects of status assessment for the device 800. For instance, the sensor component 814 may detect the on/off status of the device 800 and relative positioning among components, for example, the components may be a screen and a little keypad of the device 800. The sensor component 814 may further detect position change of the device 800 or of a component of device 800, whether there is a contact between the user and the device 800, an orientation, or an acceleration/ deceleration of the device 800 and a temperature change of the device 800. The sensor component 814 may include a proximity detector configured to detect the existence of nearby object without any physical contact. The sensor component 814 may further include optical sensors such as CMOS or CCD imaging sensors for using in image application. In some exemplary embodiments, the sensor component 814 may further include an acceleration sensor, a gyroscope sensor, a magnetic sensor, a pressure sensor or a temperature sensor.

The communication component 816 is configured to facilitate a wired or wireless communication between the device 800 and other devices. The device 800 may access to a wireless network based on a communication standard, such as WiFi, 2G or 3G, or combinations thereof. In one exemplary embodiment, the communication component 816 may receive broadcast signals or information related to broadcast from an external broadcast management system via broadcast channels. In one exemplary embodiment, the communication component 816 may further include near-field communication (NFC) module configured to facilitate short range communication. For instance, the NFC module may be realized, based upon technologies of Radio Frequency Identification (RFID), Infrared Data Association (IrDA), Ultra Wideband (UWB) or Bluetooth (BT) or other technologies.

In some exemplary embodiments, the device 800 may be realized by one or more application specific integrated circuits (ASIC), Digital Signal Processors (DSP), Digital Signal Processor Devices (DSPD), Programmable Logic Devices (PLD), Field Programmable Gate Arrays (FPGA), controllers, microcontrollers, microprocessors or other electronic components, which are configured to perform the above-mentioned methods.

In some exemplary embodiments, a non-transitory computer readable storage medium including instructions is further provided, such as the memory 804 including the instructions. These instructions may be processed by the processor 820 of the device 800 to carry out the above-mentioned method. For instance, the non-transitory computer readable storage medium may be a ROM, a Random Access Storage (RAM), a CD-ROM, a magnetic tape, a floppy disk, an optical data storage device and so on.

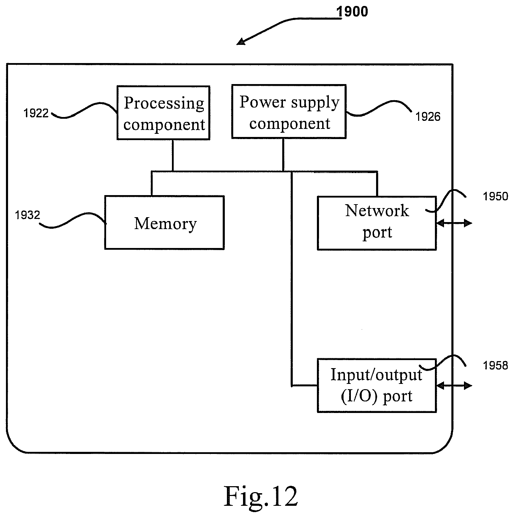

Fig.12 is a block diagram of a processing device 1900 for an application program according to a second exemplary embodiment. For instance, the device 1900 may be provided as a server. Referring to Fig.12, the device 1900 may include a processing component 1922 which may further include one or more processors; and memory resources represented by a memory 1932, configured to store instructions that could be executed by the processing component 1922, such as an application program. The application program stored in the memory 1932 may include one or more modules each of which corresponds to a group of instructions. In addition, the processing component 1922 is configured to execute the instructions, so as to perform the above-mentioned processing methods for the application programs.

The device 1900 may further include a power supply component 1926 configured to perform the power supply management of the device 1900; a wired or wireless network port 1950 configured to connect the device 1900 to a network; and an input/output (I/O) port 1958. The device 1900 may operate operating systems based and stored in the memory 1932, such as Windows ServerTM, Mac OS XTM, UnixTM, LinuxTM, FreeBSDTM and the like.

## Claims

1. A processing method for an application program, comprising:
reading out (S14) a logic process identifier and a UI process identifier in the configuration file of the application program when initiating said application program, wherein processes of the application program comprise a user interface (UI) process and a logic process for running a service program of said application program;
classifying (S15) subprograms of the application program into at least a UI class and a logic class according to the logic process identifier and the UI process identifier;
running (S16) subprograms of the application program classified as the UI class in the UI process and running subprograms of the application program classified as the logic class in the logic process;
switching (S11) the application program from running in foreground to running in background,; and
terminating (S12) the UI process of the application program while keeping the logic process of the application program running.

2. The processing method for an application program according to claim 1, further comprising:
recreating (S13) the UI process of the application program according to the logic process when switching the application program from running in background to running in foreground.

3. The processing method for an application program according to claim 1 or 2, after switching the application program from running in foreground to running in background, further comprising:
determining (S17) a time length of the application program running in background; and
terminating the UI process of the application program, when the time length of the application program running in background reaches a predetermined time length.

4. The processing method for an application program according to claim 1 or 2, after switching the application program from the running in foreground to the running in background, further comprising:
determining (S18) a quantity of UI processes running in background; and
terminating the UI process of the application program when the quantity of the UI processes running in background reaches a predetermined quantity.

5. A processing device (200) for an application program, comprising:
a reading unit (206), configured to read out a logic process identifier and a UI process identifier in a configuration file of the application program when the application program is initiated, before the first switching unit switches the application program from running in foreground to running in background, wherein processes of the application program comprise a user interface (UI) process and logic process for running a service program of said application program;
a classifying unit (207), configured to classify subprograms of the application program by process classes, according to the logic process identifier and the UI process identifier read out by the reading unit, wherein the process classes comprise at least a UI class and a logic class;
a generating unit (208), configured to generate the UI process and the logic process, according to the process classes classified by the classifying unit, wherein the subprograms of the UI class run in the UI process, and the subprograms of the logic class run in the logic process;
a first switching unit (201), configured to switch an application program from running in foreground to running in background, wherein processes of the application program comprise a user interface (UI) process and a logic process;
a terminating unit (202), configured to terminate the UI process of the application program after the first switching unit switches the application program from the running in foreground to the running in background; and
a running unit (203), configured to keep the logic process of the application program running after the first switching unit switches the application program from running in foreground to running in background.

6. The processing device for an application program according to claim 5, further comprising:
a second switching unit (204), configured to switch the application program from running in background to running in foreground; and
a recreating unit (205), configured to recreate the UI process according to the logic process after the second switching unit switches the application program from running in background to running in foreground..

7. The processing device for an application program according to 5 or 6, further comprising:
a first determining unit (209), configured to determine a time length of the application program running in background after the first switching unit switches the application program from running in foreground to running in background; and
the terminating unit, further configured to terminate the UI process of the application program after the time length determined by the first determining unit reaches the predetermined time length.

8. The processing device for an application program according to claim 5 or 6, further comprising:
a second determining unit (210), configured to determine a quantity of UI processes running in background after the first switching unit switches the application program from running in foreground to running in background; and
the terminating unit, further configured to terminate the UI processes of the application program after the quantity of the UI processes determined by the second determining unit reaches a predetermined quantity.

9. A computer program including instructions for executing the steps of a processing method for an application program according to any one of claims 1 to 4 when said program is executed by a computer.

10. A recording medium readable by a computer and having recorded thereon a computer program including instructions for executing the steps of a processing method for an application program according to any one of claims 1 to 4.

## Patentansprüche

1. Verarbeitungsverfahren für ein Anwendungsprogramm, umfassend:
Auslesen (S14) eines Logikprozessidentifikators und eines Benutzerschnittstellen-Prozessidentifikators in der Konfigurationsdatei des Anwendungsprogramms, wenn das Anwendungsprogramm initiiert wird, wobei Prozesse des Anwendungsprogramms einen Benutzerschnittstellen-(BS)-Prozess und einen Logikprozess zum Abarbeiten eines Dienstprogramms des Anwendungsprogramms umfassen,
Klassifizieren (S15) von Unterprogrammen des Anwendungsprogramms in mindestens eine BS-Klasse und eine Logik-Klasse gemäß dem Logikprozessidentifikator und dem BS-Prozessidentifikator,
Abarbeiten (S16) von Unterprogrammen des Anwendungsprogramms, die in dem BS-Prozess als die BS-Klasse klassifiziert wurden, und Abarbeiten von Unterprogrammen des Anwendungsprogramms, die in dem Logikprozess als die Logik-Klasse klassifiziert wurden,
Umschalten (S11) des Anwendungsprogramms von einem Programmablauf im Vordergrund zu einem Programmablauf im Hintergrund, und
Beenden (S12) des BS-Prozesses des Anwendungsprogramms, während der Logikprozess des Anwendungsprogramms weiter abläuft.

2. Verarbeitungsverfahren für ein Anwendungsprogramm nach Anspruch 1, ferner umfassend:
erneutes Erzeugen (S13) des BS-Prozesses des Anwendungsprogramms gemäß dem Logikprozess, wenn das Anwendungsprogramm vom Ablaufen im Hintergrund zum Ablaufen im Vordergrund umgeschaltet wird.

3. Verarbeitungsverfahren für ein Anwendungsprogramm nach Anspruch 1 oder 2, das nach dem Umschalten des Anwendungsprogramms vom Ablaufen im Vordergrund zum Ablaufen im Hintergrund ferner umfasst:
Bestimmen (S17) einer Zeitdauer des im Hintergrund ablaufenden Anwendungsprogramms, und
Beenden des BS-Prozesses des Anwendungsprogramms, wenn die Zeitdauer des im Hintergrund ablaufenden Anwendungsprogramms eine zuvor festgelegte Zeitdauer erreicht.

4. Verarbeitungsverfahren für ein Anwendungsprogramm nach Anspruch 1 oder 2, das nach dem Umschalten des Anwendungsprogramms vom Ablaufen im Vordergrund zum Ablaufen im Hintergrund ferner umfasst:
Bestimmen (S18) einer Anzahl von im Hintergrund ablaufenden BS-Prozessen, und
Beenden des BS-Prozesses des Anwendungsprogramms, wenn die Anzahl der im Hintergrund ablaufenden BS-Prozesse eine zuvor festgelegte Anzahl erreicht.

5. Verarbeitungsvorrichtung (200) für ein Anwendungsprogramm, umfassend:
eine Leseeinheit (206), die dafür konfiguriert ist, einen Logikprozessidentifikator und einen Benutzerschnittstellen-Prozessidentifikator in einer Konfigurationsdatei des Anwendungsprogramms auszulesen, wenn das Anwendungsprogramm initiiert wird, bevor die erste Umschalteinheit das Anwendungsprogramm vom Ablaufen im Vordergrund zum Ablaufen im Hintergrund umschaltet, wobei Prozesse des Anwendungsprogramms einen Benutzerschnittstellen-(BS)-Prozess und einen Logikprozess zum Abarbeiten eines Dienstprogramms des Anwendungsprogramms umfassen,
eine Klassifizierungseinheit (207), die dafür konfiguriert ist, Unterprogramme des Anwendungsprogramms gemäß dem durch die Leseeinheit ausgelesenen Logikprozessidentifikator und BS-Prozessidentifikator nach Prazessklassen zu klassifizieren, wobei die Prozessklassen mindestens eine BS-Klasse und eine Logik-Klasse umfassen,
eine Generierungseinheit (208), die dafür konfiguriert ist, den BS-Prozess und den Logikprozess gemäß den durch die Klassifizierungseinheit klassifizierten Prozessklassen zu generieren, wobei die Unterprogramme der BS-Klasse in dem BS-Prozess ablaufen und die Unterprogramme der Logik-Klasse in dem Logikprozess ablaufen,
eine erste Umschalteinheit (201), die dafür konfiguriert ist, ein Anwendungsprogramm vom Ablaufen im Vordergrund zum Ablaufen im Hintergrund umzuschalten, wobei Prozesse des Anwendungsprogramms einen Benutzerschnittstellen-(BS)-Prozess und einen Logikprozess umfassen,
eine Beendigungseinheit (202), die dafür konfiguriert ist, den BS-Prozess des Anwendungsprogramms zu beenden, nachdem die erste Umschalteinheit das Anwendungsprogramm von dem Ablaufen im Vordergrund zu dem Ablaufen im Hintergrund umgeschaltet hat, und
eine Abarbeitungseinheit (203), die dafür konfiguriert ist, den Logikprozess des Anwendungsprogramms am Laufen zu halten, nachdem die erste Umschalteinheit das Anwendungsprogramm vom Ablaufen im Vordergrund zum Ablaufen im Hintergrund umgeschaltet hat.

6. Verarbeitungsvorrichtung für ein Anwendungsprogramm nach Anspruch 5, ferner umfassend:
eine zweite Umschalteinheit (204), die dafür konfiguriert ist, das Anwendungsprogramm vom Ablaufen im Hintergrund zum Ablaufen im Vordergrund umzuschalten, und
eine Neuerzeugungseinheit (205), die dafür konfiguriert ist, den BS-Prozess gemäß dem Logikprozess neu zu erzeugen, nachdem die zweite Umschalteinheit das Anwendungsprogramm vom Ablaufen im Hintergrund zum Ablaufen im Vordergrund umgeschaltet hat.

7. Verarbeitungsvorrichtung für ein Anwendungsprogramm nach Anspruch 5 oder 6, ferner umfassend:
eine erste Bestimmungseinheit (209), die dafür konfiguriert ist, eine Zeitdauer des im Hintergrund ablaufenden Anwendungsprogramms zu bestimmen, nachdem die erste Umschalteinheit das Anwendungsprogramm vom Ablaufen im Vordergrund zum Ablaufen im Hintergrund umgeschaltet hat, und
wobei die Beendigungseinheit ferner dafür konfiguriert ist, den BS-Prozess des Anwendungsprogramms zu beenden, nachdem die durch die erste Bestimmungseinheit bestimmte Zeitdauer die zuvor festgelegte Zeitdauer erreicht.

8. Verarbeitungsvorrichtung für ein Anwendungsprogramm nach Anspruch 5 oder 6, ferner umfassend:
eine zweite Bestimmungseinheit (210), die dafür konfiguriert ist, eine Anzahl von im Hintergrund ablaufenden BS-Prozessen zu bestimmen, nachdem die erste Umschalteinheit das Anwendungsprogramm vom Ablaufen im Vordergrund zum Ablaufen im Hintergrund umgeschaltet hat, und
die Beendigungseinheit ferner dafür konfiguriert ist, die BS-Prozesse des Anwendungsprogramms zu beenden, nachdem die Anzahl der durch die zweite Bestimmungseinheit bestimmten BS-Prozesse eine zuvor festgelegte Anzahl erreicht.

9. Computerprogramm, das Anweisungen enthält, um die Schritte eines Verarbeitungsverfahrens für ein Anwendungsprogramm nach einem der Ansprüche 1 bis 4 auszuführen, wenn das Programm durch einen Computer ausgeführt wird.

10. Aufzeichnungsmedium, das durch einen Computer gelesen werden kann und auf dem ein Computerprogramm aufgezeichnet ist, das Anweisungen enthält, um die Schritte eines Verarbeitungsverfahrens für ein Anwendungsprogramm nach einem der Ansprüche 1 bis 4 auszuführen.

## Revendications

1. Procédé de traitement d'un programme d'application, comprenant les étapes suivantes :
lire (S14) un identificateur de processus logique et un identificateur de processus IU dans le fichier de configuration du programme d'application, lors du lancement dudit programme d'application, dans lequel des processus du programme d'application comprennent un processus d'interface utilisateur (IU) et un processus logique destiné à exécuter un programme de service dudit programme d'application ;
classer (S15) des sous-programmes du programme d'application dans au moins une classe IU et une classe logique en fonction de l'identificateur de processus logique et de l'identificateur de processus IU ;
exécuter (S16) des sous-programmes du programme d'application classés comme étant de la classe IU dans le processus IU et exécuter des sous-programmes du programme d'application classés comme étant de la classe logique dans le processus logique ;
faire passer (S11) le programme d'application d'une exécution en avant-plan à une exécution en arrière-plan ; et
interrompre (S12) le processus IU du programme d'application, tout en poursuivant l'exécution du processus logique du programme d'applicatian.

2. Procédé de traitement d'un programme d'application selon la revendication 1, comprenant en outre l'étape suivante :
reconstituer (S13) le processus IU du programme d'application en fonction du processus logique, lors du passage du programme d'application d'une exécution en carrière-plan à une exécution en avant-plan.

3. Procédé de traitement d'un programme d'application selon la revendication 1 ou 2, après le passage du programme d'application d'une exécution en avant-plan à une exécution en arrière-plan, comprenant en outre les étapes suivantes :
déterminer (S17) une durée du programme d'application, s'exécutant en arrière-plan ; et
interrompre le processus IU du programme d'application, lorsque la durée du programme d'application s'exécutant en arrière-plan atteint une durée prédéterminée.

4. Procédé de traitement d'un programme d'application, selon la revendication 1 ou 2, après le passage du programme d'application de l'exécution en avant-plan à l'exécution en arrière-plan, comprenant en outre les étapes suivantes :
déterminer (S18) une quantité de processus IU s'exécutant en arrière-plan ; et
interrompre le processus IU du programme d'application, lorsque la quantité de processus IU s'exécutant en arrière-plan atteint une quantité prédéterminée.

5. Dispositif de traitement (200) d'un programme d'application, comprenant :
une unité de lecture (206), conçue pour lire un identificateur de processus logique et un identificateur de processus IU dans un fichier de configuration du programme d'application, lorsque le programme d'application est lancé, avant que la première unité de commutation ne fasse passer le programme d'application d'une exécution en avant-plan à une exécution en arrière-plan, dans lequel des processus du programme d'application comprennent un processus d'interface utilisateur (IU) et un processus logique destiné à exécuter un programme de service dudit programme d'application ;
une unité de classification (207), conçue pour classer des sous-programmes du programme d'application selon des classes de processus, en fonction de l'identificateur de processus logique et de l'identificateur de processus IU lus par l'unité de lecture, dans lequel les classes de processus comprennent au moins une classe IU et une classe logique ;
une unité de génération (208), conçue pour créer le processus IU et le processus logique en fonction des classes de processus classées par l'unité de classification, dans lequel les sous-programmes de la classe IU sont exécutés dans le processus IU, et les sous-programmes de la classe logique sont exécutés dans le processus logique ;
une première unité de commutation (201), conçue pour faire passer un programme d'application d'une exécution en avant-plan à une exécution en arrière-plan, dans lequel des processus du programme d'application comprennent un processus d'interface utilisateur (IU) et un processus logique ;
une unité d'interruption (202), conçue pour interrompre le processus IU du programme d'application, après que la première unité de commutation a fait passer le programme d'application de l'exécution en avant-plan à l'exécution en arriére-plan ; et
une unité d'exécution (203), conçue pour poursuivre l'exécution du processus logique du programme d'application, après que la première unité de commutation a fait passer le programme d'application d'une exécution en avant-plan à une exécution en arrière-plan.

6. Dispositif de traitement d'un programme d'application selon la revendication 5, comprenant en outre :
une seconde unité de commutation (204), conçue pour faire passer le programme d'application d'une exécution en arrière-plan à une exécution en avant-plan ; et
une unité de reconstitution (205), conçue pour reconstituer le processus IU en fonction du processus logique, après que à seconde unité de commutation a fait passer le programme d'application d'une exécution en arrière-plan à une exécution en avant-plan.

7. Dispositif de traitement d'un programme d'application selon la revendication 5 ou 6, comprenant en outre :
une première unité de détermination (209), conçue pour déterminer une durée du programme d'application s'exécutant en arrière-plan, après que la première unité de commutation a fait passer le programme d'application d'une exécution en avant-plan à une exécution en arrière-plan ; et
l'unité d'interruption, conçue en outre pour interrompre le processus IU du programme d'application, après que la durée déterminée par la première unité de détermination a atteint à durée prédéterminée.

8. Dispositif de traitement d'un programme d'application, selon la revendication 5 ou 6, comprenant en outre :
une seconde unité de détermination (210), conçue pour déterminer une quantité de processus IU s'exécutant en arrière-plan, après que la première unité de commutation a fait passer le programme d'application d'une exécution en avant-plan à une exécution en arrière-plan ; et
l'unité d'interruption, conçue en outre pour interrompre les processus IU du programme d'application, après que à quantité de processus IU déterminée par la seconde unité de détermination a atteint une quantité prédéterminée.

9. Programme informatique comprenant des instructions destinées à exécuter les étapes d'un procédé de traitement d'un programme d'application selon l'une quelconque des revendications 1 à 4, lorsque ledit programme est exécuté par un ordinateur.

10. Support d'enregistrement lisible par un ordinateur et sur lequel est enregistré un programme informatique comprenant des instructions destinées à exécuter les étapes d'un procédé de traitement d'un programme d'application selon l'une quelconque des revendications 1 à 4.
